# EUROPEAN PATENT APPLICATION

(11) **EP 4 358 278 A1**
(43) Date of publication of application: **24.04.2024**
(21) Application number: 23753245.2
(22) Date of filing: 13.02.2023
(51) Int. Cl.: H01M 50/531, H01M 50/54, H01M 50/528, H01M 10/04, H01M 50/103

(54) **PRISMATIC SECONDARY BATTERY INCLUDING STACKED CELLS**

(30) Priority: 14.02.2022 KR 20220018631
(71) Applicant: LG ENERGY SOLUTION, LTD., Seoul 07335 (KR)
(72) Inventor: KO, Young Jun, Daejeon 34122 (KR); SUNG, Joo Hwan, Daejeon 34122 (KR); JUNG, Kyung Hwan, Daejeon 34122 (KR)
(74) Representative: Goddar, Heinz J.
(86) International application number: PCT/KR2023/002080
(87) International publication number: WO 2023/153899

(57) **Abstract**

A battery includes an electrode assembly. The electrode assembly includes a first electrode including a first portion and a first tab extending from the first portion, a separator laminated on the first electrode, and a second portion and a second tab extending from the second portion, and a second electrode laminated on the separator. The battery further includes a current collector assembly including a plate, a first current collector coupled to a proximal end of the plate and including a first part and a second part opposite to the first part, and a second current collector coupled to a distal end of the plate and including a third part and a fourth part opposite to the third part. The battery may further include a housing coupled to the plate. The first and second parts of the first current collector may be configured to move in opposite directions.

## Description

This application claims the benefit of priority based on Korean Patent Application No. 1 0-2022-0018631 filed on February 14, 2022, and all contents disclosed in the literature of the Korean Patent Application are included as part of this specification.

### [Technical Field]

The present invention relates to a prismatic secondary battery, and more particularly to a prismatic secondary battery including a stackable cell and a movable current collector for slidably securing electrodes of the stackable cell.

### [Background Technology of the Invention]

Secondary batteries are rechargeable unlike primary batteries, and due to the possibility of a compact size and a high capacity, a lot of research on secondary batteries is being carried out. Due to technology development and an increase in demand for mobile devices and also due to electric vehicles and energy storage systems that are emerging in line with the needs of the times for environmental protection, the demand for secondary batteries as energy sources is more rapidly increasing.

Secondary batteries are classified into coin type batteries, cylindrical type batteries, prismatic type batteries, and pouch type batteries according to a shape of a battery case. In such a secondary battery, an electrode assembly mounted in a battery case is a chargeable and dischargeable power generating device having a structure in which electrodes and a separator are stacked.

An electrode assembly may be approximately classified into a jelly-roll type electrode assembly in which a separator is interposed between a positive electrode and a negative electrode, each of which is provided in the form of a sheet coated with an active material, and then, the positive electrode, the separator, and the negative electrode are wound, a stack type electrode assembly in which a plurality of positive and negative electrodes with a separator interposed therebetween are sequentially stacked, and a stack/folding type electrode assembly in which stack type unit cells are wound with a separation film having a long length.

A secondary battery is meeting various demands in the market by combining a shape of a battery case and a shape of an electrode assembly. In particular, in recent years, a new market field of electric vehicles in which secondary batteries are mounted in large quantities has been opened. Accordingly, in the mass production of secondary batteries, productivity improvement through yield improvement and cost reduction has become a very important part.

### [Related Art Documents]

(Patent document 1) Korean Patent Publication No. 10-2019-0102816 (published on September 4, 2019)

### [Description of the Invention]

### [Technical Problem]

The present invention is directed to provide a secondary battery, particularly a prismatic secondary battery, which can improve yield and reduce production costs, and which has an improved safety against swelling phenomena occurring during use.

### [Technical Solution]

In an exemplary embodiment, a secondary battery according to the present invention includes: an electrode assembly including a first electrode including a first portion and a first tab extending from the first portion, a separator laminated on the first electrode, and a second electrode including a second portion and a second tab extending from the second portion, and laminated on the separator; a current collector assembly including a plate, a first current collector coupled to a proximal end of the plate and including a first part and a second part opposite to the first part, and a second current collector coupled to a proximal end of the plate and including a third part and a fourth part opposite to the third part; and a housing coupled to the plate, wherein: the first tab is in a first receiving space between the first and second parts of the first current collector, the second tab is in a second receiving space between a third part and a fourth part of the second current collector, and the first and second parts of the first current collector are configured to move in opposite directions.

The first portion of the first electrode may include an active material.

The first receiving space may be an opening between the proximal end of the first part and the distal end of the second part.

The second receiving space may be an opening between the proximal end of the third part and the distal end of the fourth part.

A part of the first tab may be bent toward the first or second part.

A part of the first tab may be coupled to a surface of the first current collector.

The secondary battery may further include a friction reducing element between the first tab and the first part, or between the first tab and the second part.

The first part and the second part may exert pressure on the first tab.

The plate may include a venting portion.

The plate may include a terminal electrically coupled to the first tab or to a first tab.

A side of the electrode assembly may be spaced apart from the first or second current collector.

An end of the first tab may be coupled to a coupling part on the first part or second surface of the first current collector, and the coupling part and the first receiving space may form an arc.

The first tab may be configured to slide between the first receiving spaces.

The housing may include a terminal electrically coupled to the first tab or the second tab.

The housing may include a venting portion.

Meanwhile, in an exemplary embodiment, a current collector assembly for a secondary battery according to the present invention includes: a plate; a first current collector coupled to a proximal end of the plate and comprising a first part and a second part opposite to the first part; a second current collector coupled to a distal end of the plate and comprising a third part and a fourth part opposite to the third part; a first receiving space between the first part and the second part of the first current collector; and a second receiving space between the third part and the fourth part of the second current collector; wherein the first part and the second part of the first current collector are configured to move in opposite directions.

The plate may include a venting portion.

In addition, in an exemplary embodiment, a manufacturing method of a secondary battery according to the present invention includes providing a stack type electrode assembly including: providing a first electrode comprising a first portion and a first tab extending from the first portion; laminating a separator on the first electrode; and laminating a second electrode comprising a second portion and a second tab extending from the second portion on the separator; forming a current collector assembly including: providing a plate; coupling a first current collector comprising a first part and a second part opposite to the first part to a proximal end of the plate; and coupling a second current collector comprising a third part and a fourth part opposite to the third part to a distal end of the plate; providing a plate; separating the first and second parts of the first current collector in opposite directions from each other; inserting the first tab into a first receiving space between the first and second parts of the first current collector; and inserting the first tab into a second receiving space between the third and fourth parts of the second current collector.

The manufacturing method of a secondary battery may further include bending the first tab in a first direction toward the first part or second part.

The manufacturing method of a secondary battery may further include attaching an end of the first tab to a surface of the first part of the second part.

### [Advantageous Effects]

One example of the present invention may be provided by utilizing a stack type battery. In some embodiments, the notching(punching) process for the platelets may be omitted in the manufacture of the stack type electrode assembly, thereby reducing the yield reduction and process control difficulties associated with the notching process.

Furthermore, in a stack type electrode structure of the present invention, since positive and negative electrode uncoated portions serving as electrode tabs include spare length portions, even when swelling occurs in the stack type electrode assembly due to battery degradation or impact caused by repeated charging and discharging, excessive stress is not applied to a welding portion, thereby improving safety by preventing the disconnection of the electrode tab during use of a secondary battery.

In addition, in the present invention, part of an electrode tab is supported using a clip structure, and the movement of the electrode tab due to swelling is induced into a sliding motion so that the electrode tab is moved only that much in proportion to a swelling amount of the stack type electrode assembly. Accordingly, the spare length portion of the electrode tab can effectively respond to a swelling phenomenon of the stack type electrode assembly, and the position and movement of the spare length portion can be precisely controlled to remove a risk of an internal short circuit or the like.

However, the technical effects obtainable through the present invention are not limited to the above-described effects, and other effects that are not described herein will be clearly understood by those skilled in the art from the following descriptions of the present invention.

### [Brief Description of the Drawings]

The accompanying drawings illustrate exemplary embodiments of the present invention and, together with the following detailed description, serve to provide further understanding of the technical spirit of the present invention. However, the present invention is not to be construed as being limited to the drawings.
FIG. 1 is an exploded perspective view of a stack type battery according to an exemplary embodiment of the present invention.
FIG. 2(a) is a cross-sectional view of a stack type electrode assembly according to an exemplary embodiment of the present invention.
FIG. 2(b) is a top to bottom view of an exemplary anode and cathode according to an exemplary embodiment of the present invention.
FIG. 3 is an exploded perspective view of an exemplary battery cell according to an exemplary embodiment of the present invention. FIG. 4(a) is a perspective view of an exemplary current collector assembly according to an exemplary embodiment of the present invention.
FIG. 4(b) is a perspective view of another exemplary current collector assembly according to an exemplary embodiment of the present invention.
FIG. 5 is a perspective view of an exemplary assembled battery cell according to an exemplary embodiment of the present invention.
FIG. 6(a) is a partial perspective view of an exemplary battery cell according to an exemplary embodiment of the present invention.
FIG. 6(b) is a partial perspective view of another exemplary battery cell including a welding portion according to an exemplary embodiment of the present invention.
FIG. 7(a) is a partial perspective view of an exemplary battery cell with folded electrode tabs according to an exemplary embodiment of the present invention.
FIG. 7(b) is a partial perspective view of another exemplary battery cell with folded electrode tabs and a welding portion according to an exemplary embodiment of the present invention.
FIG. 8 is a partial perspective view of an exemplary battery cell including a plurality of stack type electrode assemblies according to an exemplary embodiment of the present invention.
FIG. 9 is a cross-sectional view of an exemplary battery cell with a spare length portion according to an exemplary embodiment of the present invention.
FIG. 10 is a cross-sectional view of the exemplary battery cell of FIG. 9 after swelling according to an exemplary embodiment of the present invention.
FIG. 11 is a cross-sectional view of an exemplary battery cell including a plurality of stack type electrode assemblies with a spare length portion according to an exemplary embodiment of the present invention.
FIG. 12 is a cross-sectional view of an exemplary battery cell including a plurality of stack type electrode assemblies with a spare length portion and a single welding portion according to an exemplary embodiment of the present invention.
FIG. 13 is a cross-sectional view of an exemplary battery cell including a friction reducing element according to an exemplary embodiment of the present invention.
FIG. 14 is a cross-sectional view of an exemplary battery cell including another friction reducing element according to an exemplary embodiment of the present invention.

### [Best Mode]

While the present invention may be variously changed and have various embodiments, specific embodiments will be described in detail below.

However, it is to be understood that the present invention is not limited to the specific embodiments but includes all modifications, equivalents, and substitutions included in the spirit and the scope of the present invention.

In this application, it should be understood that terms such as "include" or "have" are intended to indicate the presence of a feature, number, step, operation, component, part, or a combination thereof described on the specification, and they do not preclude the possibility of the presence or addition of one or more other features or numbers, steps, operations, components, parts or combinations thereof.

Also, when a portion such as a layer, a film, an area, a plate, etc is referred to as being "on" another portion, this includes not only the case where the portion is "directly on" another portion but also the case where still another portion is interposed therebetween. On the other hand, when a portion such as a layer, a film, an area, a plate, etc. is referred to as being "under" another portion, this includes not only the case where the portion is "directly under" another portion but also the case where still another portion is interposed therebetween. In addition, to be disposed "on" in the present application may include the case disposed at the bottom as well as the top.

The present invention relates to a stack type electrode structure. In one example, the stack type electrode structure includes a stack type electrode assembly in which unit cells including a positive electrode and a negative electrode with a separator interposed therebetween are stacked vertically, and each of a positive electrode uncoated portion and a negative electrode uncoated portion of each unit cell is disposed on one of facing side surfaces, and a current collector plate including a positive electrode terminal and a negative electrode terminal.

Here, the current collector plate includes a positive electrode current collector and a negative electrode current collector which are made of a conductive material, are electrically connected to the positive electrode terminal and the negative electrode terminal, respectively, and extend vertically from both ends thereof, and the positive electrode current collector and the negative electrode current collector are coupled to the positive electrode uncoated portion and the negative electrode uncoated portion, respectively.

In particular, according to the present invention, the positive electrode uncoated portion and the negative electrode uncoated portion serve as a positive electrode tab and a negative electrode tab, respectively, and widths of the positive electrode uncoated portion and the negative electrode uncoated portion correspond to widths of a positive electrode coated portion and a negative electrode coated portion, respectively.

As described above, in the stack type electrode structure according to the present invention, a separate notching process is not performed on the positive electrode uncoated portion and the negative electrode uncoated portion serving as the positive electrode tab and the negative electrode tab. That is, the widths of the positive electrode uncoated portion and the negative electrode uncoated portion correspond to the widths of a positive electrode coated portion and a negative electrode coated portion, respectively, and a separate notching process of forming an electrode tab is omitted, thereby reducing yield reduction and process management difficulties due to the notching process and improving productivity.

The present invention described above will be further illustrated by way of some examples and by means of the accompanying drawings. Throughout the drawings, wherever possible, the same drawing symbols will be used for identical or similar configurations.

### [Mode for Invention]

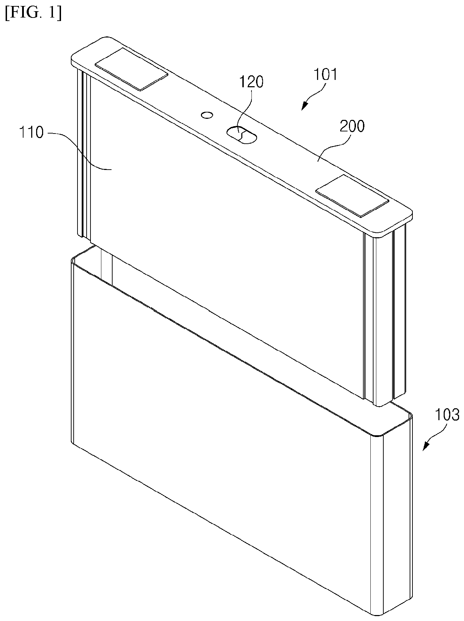

FIG. 1 is an exploded perspective view of a stack type battery 100 according to an exemplary embodiment of the present invention. The stack type battery 100 may include a battery cell 101 and a housing (case) 103. In one embodiment, the battery cell 101 may include a stack type electrode assembly 110 and a current collector assembly 200 coupled to the stack type electrode assembly 110. In one embodiment, the battery cell 101 may be inserted through an opening in the housing 103 and disposed within the housing 103 to form the stack type battery 100. For example, the housing 103 may be a hexahedral battery case having an opening and a space formed to receive the battery cell 101, but the shape and size of the housing 103 is not limited thereto.

In one embodiment, the battery cell 101 may include a venting portion 120. The venting portion 120 is configured to vent excess gas generated inside the stack type battery 100 before, during, and/or after operation of the stack type battery 100. The venting portion 120 may be configured to change shape when the internal pressure of the stack type battery 100 is greater than a preset pressure. For example, the venting portion 120 may be made of a material that deforms or ruptures based on the preset pressure resistance of the stackable battery 100. Accordingly, the excess gas generated inside the stack type battery 100 is discharged, causing the internal pressure of the stack type battery 100 to drop. The preset pressure value may be set based on the material of the housing 103 and/or the pressure resistance of the battery cell 101.

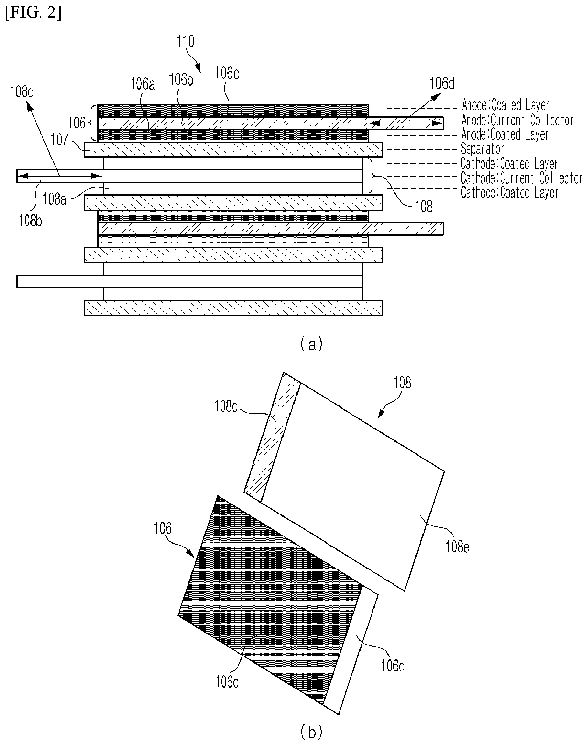

FIG. 2(a) is a cross-sectional view of a stack type electrode assembly 110 according to an exemplary embodiment of the present invention. In one embodiment, as shown in FIG. 2(a), the stack type electrode assembly 110 may include one or more anodes 106, one or more cathodes 108, and one or more separators 107 disposed between the one or more anodes 106 and the one or more cathodes 108. In one embodiment, as shown, for example, in FIG. 2(a), the one or more anodes 106 may include a first anode layer 106a, a current collector 106b above the first anode layer 106a, and a second anode layer 106c above the current collector 106b. In one embodiment, the first and second anode layers 106a, 106c may include an active material applied to one or more surfaces of the first and second anode layers 106a, 106c and/or the current collector 106b of the anode 106. Furthermore, the anode 106 may include an uncoated portion 106d. For example, as shown in FIG. 2(a), the uncoated portion 106d may include at least a part of the current collector 106b to which no active material has been applied. As used herein, the uncoated portion may define a part or all of the uncoated portion to which no active material is applied.

In one embodiment, as shown, for example, in FIG. 2(a), the one or more cathodes 108 may include a first cathode layer 108a, a current collector 108b above the first cathode layer 108a, and a second cathode layer 108c above the current collector 108b. In one embodiment, the first and second cathode layers 108a, 108c may include an active material applied to one or more surfaces of the first and second cathode layers 108a, 108c and/or the current collector 108b of the cathode 108. Furthermore, the cathode 108 may include an uncoated portion 108d. For example, the uncoated portion 108d may include at least a part of the current collector 108b to which no active material has been applied, as shown in FIG. 2(a). In this embodiment, the uncoated portion may refer to a part or all of the uncoated portion of the current collector 108b of the cathode 108 to which the active material is not applied.

In one embodiment, the stack type electrode assembly 110 may be a bidirectional electrode assembly with each of the anode uncoated portions 106d (e.g., positive electrode uncoated portion) and each of the cathode uncoated portions 108d (e.g., negative electrode uncoated portion) on opposite sides of the stack type battery 100.

FIG. 2(b) is a top-to-bottom view of an exemplary anode 106 and cathode 108, in accordance with one embodiment of the present disclosure. FIG. 2(b) shows an anode uncoated portion 106d and an anode including an anode coated portion 106e. Furthermore, FIG. 2(b) shows a cathode 108 including a cathode uncoated portion 108d and a cathode coated portion 108e. In one embodiment, as shown in FIG. 2(b), the anode uncoated portion 106d and the cathode uncoated portion 108d can be disposed along one side of the anode 106 and the cathode 108, respectively. Unlike the anode and cathode of conventional electrode assemblies, the anode 106 and the cathode 108 do not include notches along the sides on which the uncoated portions 106d, 108d are provided. This means that, in this embodiment, the anode 106 may include a full-length anode uncoated portion 106d, as shown in FIG. 2(b). The cathode 108 may also include a full-length cathode uncoated portion 108d, as shown in FIG. 2(b). Accordingly, productivity is improved in manufacturing a stack type battery 100 having anode 106 and cathode 108 with an uncoated portion without any notching.

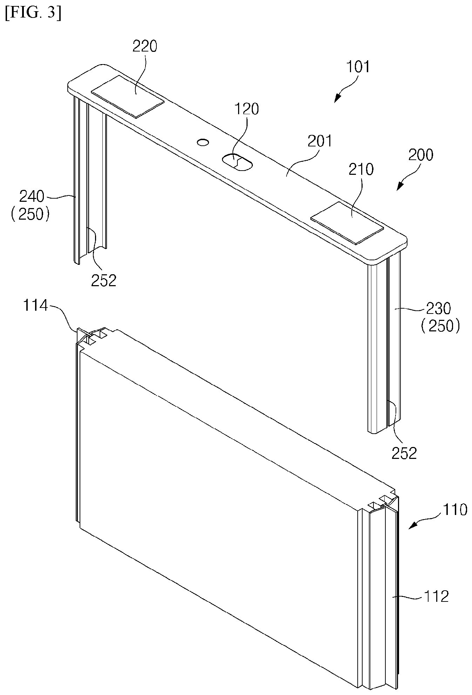

FIG. 3 is an exploded perspective view of a battery cell 101 according to an exemplary embodiment of the present invention.

In one embodiment, the battery cell 101 may include a stack type electrode assembly 110 and a current collector assembly 200. The battery cell 101 may be for example, as shown in FIG. 1, a structure formed by coupling the stack type electrode assembly 110 and the current collector assembly 200.

In one embodiment, the current collector assembly 200 may include a plate 201, a positive electrode terminal 210, and a negative electrode terminal 220. The positive electrode terminal 210 and negative electrode terminal 220 may be disposed on the plate 201 and may have a square shape, but are not limited thereto. The current collector assembly 200 may include a positive electrode current collector 230 and a negative electrode current collector 240, each made of a conductive material. The positive electrode current collector 230 and the negative electrode current collector 240 may be collectively referred to as a clip structure 250. As shown in FIG. 3, a proximal end of the positive electrode current collector 230 may be connected to one end of the plate 201 and a proximal end of the negative electrode current collector 240 may be connected to the other end of the plate 201. The positive electrode current collector 230 and the negative electrode current collector 240 may be electrically connected to the positive electrode terminal 210 and the negative electrode terminal 220, respectively. As shown in FIG. 3, the positive electrode and negative electrode current collectors 230, 240 may extend vertically toward opposite sides of the plate 201. Accordingly, the current collector assembly 200 may be a flat member including a current collector, which may be inserted into any opening of the housing (or a battery case, not shown in FIG. 3 for clarity) 103 and coupled to form a seal. For example, the current collector assembly 200 may be coupled to an opening formed in a top surface of the battery case (e.g., hexagonal battery case or housing) 103 to receive the battery cell 1001. The current collector assembly 200 may be referred to as a cap plate, as a plate 201 of the current collector assembly 200 may be positioned on the top surface of the stack type battery 100 to function as a cap to close the opening of the housing 103.

Referring to FIG. 3, the stack type electrode assembly 110 may include a positive electrode uncoated portion tab 112 and a negative electrode uncoated portion tab 114. The positive electrode uncoated portion tab 112 can include a plurality of anode uncoated portion tabs (e.g., 106d) of an anode current collector (e.g., 106b). The shape and size of the positive electrode uncoated portion tab 112 and the negative electrode uncoated portion tab 114 may correspond to, but are not limited to, the shape of the anode uncoated portion 106d and the cathode uncoated portion 108d, respectively. Furthermore, the negative electrode uncoated portion tab 114 may include a plurality of cathode uncoated portions (e.g., 108d) of the cathode current collector (e.g., 108b). In one embodiment, the positive electrode current collector 230 and the negative electrode current collector 240 may be coupled to the positive electrode uncoated portion tab 112 and the negative electrode uncoated portion tab 114 of the stack type electrode assembly 110, thereby forming the battery cell 101 according to an exemplary embodiment of the present invention.

Continuing to refer to FIG. 3, the positive electrode and negative electrode current collectors 230, 240 may be made of a conductive material. However, it should be noted that the fact that the positive electrode current collector 230 and the negative electrode current collector 240 may each be made of a conductive material does not limit the entirety of the positive electrode and negative electrode current collectors 230, 240 to being made of a conductive material. For example, in some embodiments, only a part of the positive electrode and negative electrode current collectors 230, 240 that engage or contact the positive electrode uncoated portion tab 112 and negative electrode uncoated tab tab 114 may be made of a conductive material.

In an exemplary embodiment of the present invention, the positive electrode uncoated portion tab 112 and the negative electrode uncoated portion tab 114 may be positive electrode and negative electrode tabs, respectively. Furthermore, the width of the positive electrode uncoated portion tab 112 and the width of the negative electrode uncoated portion tab 114 may correspond to the width of the coated portion of the anode 106 and the width of the coated portion of the cathode 108, respectively, as shown, for example, in FIG. 2. As the widths of the positive electrode uncoated portion tab 112 and the negative electrode uncoated portion tab 114 correspond to the width of the coated portion of the anode 106 and the width of the coated portion of the cathode 108, it is permissible to omit a separate notching process to form the electrode tabs. Accordingly, the present invention improves the productivity of the secondary battery by essentially eliminating the yield reduction and process management difficulties of the conventional notching process.

Continuing to refer to FIG. 3, the positive electrode current collector 230 and the negative electrode current collector 240, which will be collectively referred to herein as the clip structure 250, may elastically or movably fix the positive electrode uncoated portion tab 112 and the negative electrode uncoated portion tab 114, respectively. In the present invention, the clip structure 250 may be defined as any structure similar to a pair of tongs or other mechanism that can exert sufficient pressure on the positive electrode and negative electrode current collectors 230, 240 to join or fix the positive electrode uncoated portion tab 112 and the negative electrode uncoated portion tab 114.

By the characteristics of the clip structure 25, the joining or fixing of the positive electrode and negative electrode uncoated portion tabs 112, 114 to the positive electrode and negative electrode current collectors 230, 240 can be accomplished securely and easily. In one embodiment, the clip structure 250 is shown as having a slit (or opening) 252 or a through-hole formed along a vertical direction of the positive electrode current collector 230 and/or negative electrode current collector 240. The size or shape of the slit (or opening) 252 is not limited thereto. The positive electrode and negative electrode uncoated portion tabs 112, 114 can be inserted or slid into the slits (or openings) 252 of the positive electrode and negative electrode current collectors 230, 240 to be firmly coupled.

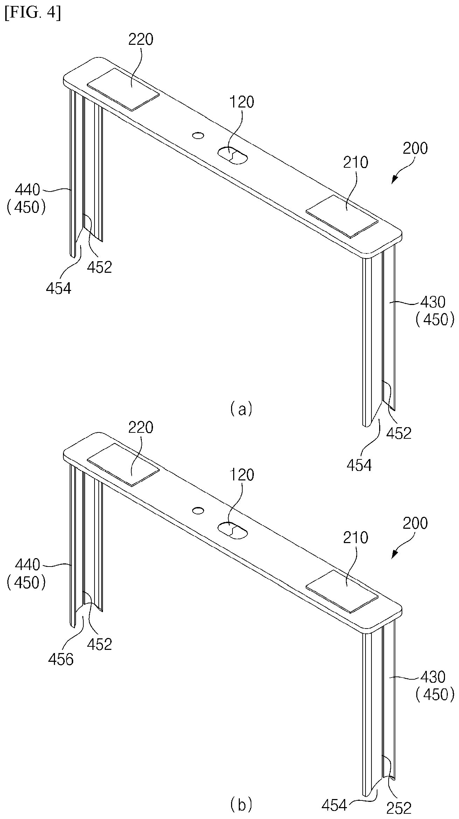

FIGS. 4(a) and (b) are perspective views of a current collector assembly 200 according to another exemplary embodiment of the present invention. FIG. 4(a) shows the current collector assembly 200 including a positive electrode current collector 430 and a negative electrode current collector 440, each made of a conductive material. The positive electrode current collector 430 and the negative electrode current collector 440 may be collectively referred to as a clip structure 250. The positive electrode current collector 430 and negative electrode current collector 440 may be electrically connected to a positive electrode terminal 210 and a negative electrode terminal 220, respectively. In such an embodiment, the positive electrode current collector 430 may include a notch 454 at its distal end. Similarly, the negative electrode current collector 440 may include a notch 454 at its distal end. The notch 454 allow the positive electrode uncoated portion tab 112 and/or the negative electrode uncoated portion tab 114 to be easily inserted or slid into the slits (or openings) 452 of the positive electrode current collector 430 and/or the negative electrode current collector 440. Due to the shape and size of the notch 454, the positive electrode uncoated portion tab 112 can be easily inserted into the slit (or opening) 452. Accordingly, the notch 454 may allow for greater manufacturing tolerances and improve production yields and efficiency.

FIG. 4(b) illustrates another exemplary embodiment of the current collector assembly 200. In this embodiment, the positive electrode current collector 430 can include a semicircular ligation 456 in its distal end. Similarly, the negative electrode current collector 440 can include a semicircular ligation 456 in its distal end. The semicircular ligation 456 is configured to allow the positive electrode uncoated portion tab 112 and/or the negative electrode uncoated portion tab 114 to be inserted or slid into the semicircular ligation 456 of the positive electrode current collector 430 and/or the negative electrode current collector 440. Due to the shape and size of the semicircular ligation 456, the positive electrode uncoated portion tab 112 can be easily inserted or slid into the semicircular ligation 456. Accordingly, the semicircular ligation 456 may allow for greater manufacturing tolerances and improve production yield and efficiency.

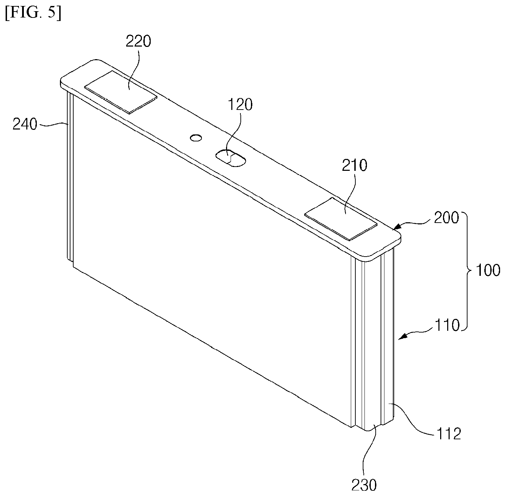

FIG. 5 is a perspective view of a battery cell 101 assembled according to an exemplary embodiment of the present invention. As shown in FIG. 5, the assembled battery cell 101 may include a stack type electrode assembly 110, which is coupled to the current collector assembly 200 by means of the positive electrode and negative electrode uncoated portion tabs 112, 114 (not shown for clarity) sliding into or inserted into slits (or openings) 252 in the positive electrode and negative electrode current collectors 230, 240.

In such an embodiment, the positive electrode uncoated portion tab 112 may be folded toward one side of the positive electrode current collector 230 such that at least a part of the surface of the positive electrode current collector 230 is coupled to at least a part of the surface of the positive electrode uncoated portion tab 112, for example, as shown in FIG. 5. Although not shown in FIG. 5 for clarity, the negative electrode uncoated portion tab 114 may be folded toward one side of the negative electrode current collector 240 in a similar manner. By coupling the surfaces of either the positive electrode and negative electrode uncoated portion tabs 112, 114, the strength of the bond between the uncoated portion tabs 112, 114 and the current collectors 230, 240 is increased, and greater electrical contact can be made between the uncoated portion tabs 112, 114 and the current collectors 230, 240.

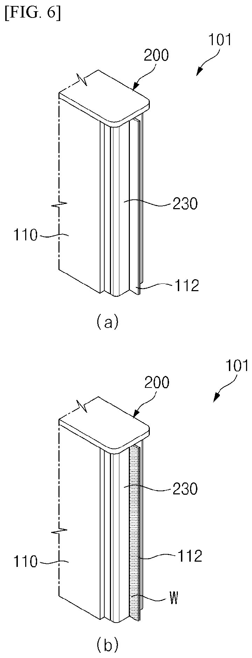

FIGS. 6(a) through 7(b) are drawings illustrating various coupling arrangements between the uncoated portion tabs 112, 114 and the current collectors 230, 240 according to the present invention. For example, FIGS. 6(a) through 7(b) illustrate coupling arrangements or configurations between the positive electrode uncoated portion tab 112 and the positive electrode current collector 230. These coupling arrangements or configurations can equally be applied to the opposing negative electrode uncoated portion tab 114 and negative electrode current collector 240. Only one side of the assembled battery cell 101 is shown for clarity of illustration and description of this embodiment.

FIG. 6(a) illustrates an exemplary embodiment in which the positive electrode uncoated portion tab 112 may be coupled or fixed to the positive electrode current collector 230 by inserting or sliding into a slit (or opening) 252 in the positive electrode current collector 230. In this embodiment, no further processing may be required. Accordingly, this embodiment provides a relatively simple coupling structure.

Alternatively, FIG. 6(b) illustrates an alternative exemplary embodiment in which the positive electrode uncoated portion tab 112 may be coupled or fixed to the positive electrode collector 230 by being inserted or slid into the slit (or opening) 252 of the positive electrode collector 230 and welded to or around the welding area W shown in FIG. 6(b). By welding, the strength of the coupling between the positive electrode uncoated portion tab 112 and the positive electrode current collector 230 is increased and the reliability of the coupling is improved. In such an embodiment, the positive electrode uncoated portion tab 112 may be formed by inter-welding a plurality of anode uncoated portions (e.g., 106d). Additionally, the stacked anode uncoated portions 106d of the positive electrode uncoated portion tab 112 may be welded together at or around the welding area W with respect to the positive electrode current collector 230. In FIG. 6(b), the welding area W is depicted as being formed across the entirety of the positive electrode uncoated portion tab 112, but this is merely an illustrative example, and it is of course possible that the welding region W may be formed on only a part thereof.

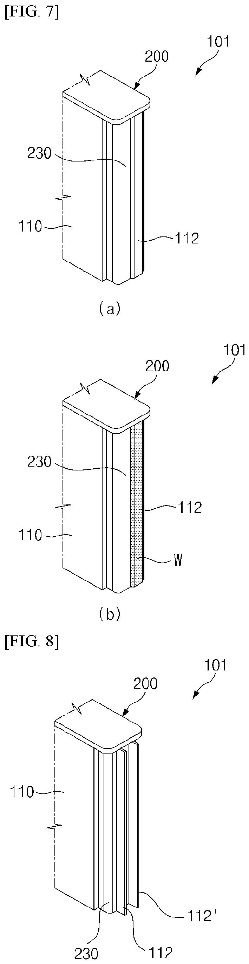

FIG. 7(a) illustrates that a protruding end or edge of the positive electrode uncoated portion tab 112 or negative electrode uncoated portion tab 114 may be bent toward one side of the clip structure 250 or the current collectors 230, 240, in accordance with one embodiment of the present invention. As the protruding ends of the uncoated portion tabs 112, 114 are bent toward one side of the clip structure 250 or the current collector 230, 240, the strength of the coupling between the uncoated portion tabs 112, 114 and the current collector 230, 240 is further increased and unnecessary volume or space in the stack type battery 100 is reduced. Accordingly, the capacity of the stack type battery 100 is increased compared to other prismatic secondary batteries of the same or similar size.

FIG. 7(b) illustrates that, similar to the embodiment of FIG. 7(a) described above, a protruding end or edge of the positive electrode uncoated portion tab 112 or negative electrode uncoated portion tab 114 may be bent toward one side of the clip structure 250. Additionally, the positive electrode uncoated portion tab 112 or negative electrode uncoated portion tab 114 may be welded to, or around, the current collectors 230, 240, thereby further increasing the strength of the coupling between the uncoated portion tabs 112, 114 and the current collectors 230, 240 and reducing unnecessary volume or space in the stack type battery 100. Accordingly, the capacity of the stack type battery 100 is increased compared to other prismatic secondary batteries of the same or similar size.

FIG. 8 is a perspective view of a battery cell 101 according to an exemplary embodiment of the present invention. In this embodiment, as shown in FIG. 8, the battery cell 101 may include a plurality of positive and negative tabs 112, 112' arranged parallel to each other. In this embodiment, the positive electrode current collector 230 or the negative electrode current collector 240 may include a plurality of sites disposed perpendicular to each other and parallel to the current collector assembly 200 to form a plurality of slits (or openings) 252 (not shown for illustrative clarity). Accordingly, the positive electrode uncoated portion tab 112 or negative electrode uncoated portion tab 114 may be divided into a plurality of uncoated portion tabs 112, 112', 114, 114', corresponding to the number of a plurality of sites on the positive electrode current collector 230 or the negative electrode current collector 240. And, the plurality of uncoated portion tabs 112, 112', 114, 114' may be individually coupled or fixed through slits (or openings) 252 in the positive electrode current collector 230 or negative electrode current collector 240, corresponding to the aforementioned embodiments of the present invention. In FIG. 8, two positive electrode uncoated portion tabs 112, 112' are shown, but the same arrangement or structure may be applied to the negative electrode uncoated portion tabs 114, 114' in accordance with the aforementioned embodiments of the invention. By providing a plurality of slits (or openings) 252 and a plurality of sites on the current collectors 230, 240, a stable coupling strength may be provided between the uncoated portion tabs 112, 114 and the current collectors 230, 240 even as the thickness of the stack type electrode assembly 110 increases. Accordingly, the secondary battery of the present invention can provide production flexibility to accommodate increases in the size of the secondary battery. In this embodiment, the plurality of sites of the current collectors 230, 240 does not imply that it is necessary to have a plurality of structurally independent current collectors 230, 240. For example, as shown in FIG. 8, it is noted above that the plurality of clip structures 250 or current collectors 230, 240 can be structurally organized by forming a plurality of slits (or openings) 252 (not shown for clarity of illustration and description) in a single current collector 230 or 240.

Additionally or alternatively, although not shown, any of the bending structures (or configurations) or welding areas W described in the preceding embodiments may be applied to each of the uncoated portion tabs 112, 114 in various embodiments of the present invention.

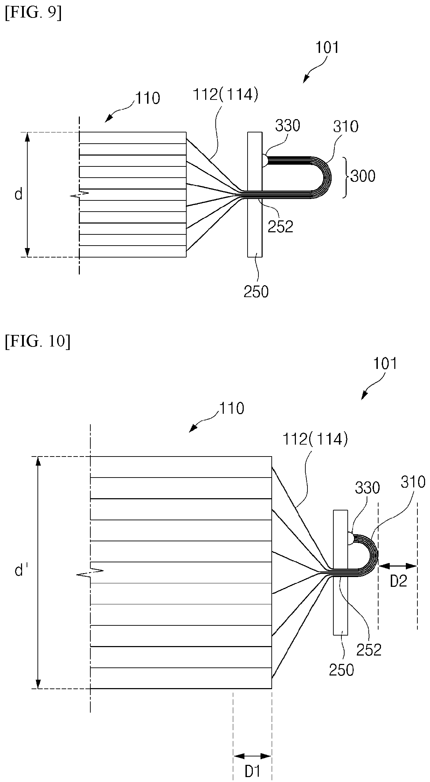

FIG. 9 is a cross-sectional view illustrating the arrangement or configuration of the positive electrode and/or negative electrode uncoated portion tabs 112, 114, and relates to the electrode tabs and clip structures 250 or current collectors 230,240 of the stack type electrode assembly 110. As shown in FIG. 9, the positive electrode uncoated portion tab 112 or negative electrode uncoated portion tab 114 extends from the stack type electrode assembly 110 and passes through a slit (or opening) 252. The positive electrode uncoated portion tab 112 or negative electrode uncoated portion tab 114 may include a spare length portion 300, which may have an arc or curved shape, for example, to allow for a change in length based on the amount of swelling caused by the stack type electrode assembly 110.

Swelling is a phenomenon that can occur in a stack type electrode assembly 110, for example, the stack type electrode assembly 110 can gradually swell over time due to repeated charging and discharging. Swelling can also be caused by vaporization of the lithium-based electrolyte in a typical battery during operation, which can cause the battery to swell or deform its surface to become, for example, convex. Additionally, swelling can cause deformation of the battery case or housing, which in severe cases can lead to electrolyte leakage, fire or explosion in conventional batteries.

Swelling can also affect the internal structure of the secondary battery. For example, swelling inside the battery can place physical stresses on the electrode tabs. In a conventional stack type electrode assembly, the electrode tabs (positive electrode tabs and negative electrode tabs) of each of a plurality of unit cells may be coupled to the electrode terminals (positive and negative terminals) by welding. Accordingly, the distance from each unit cell to the electrode terminals may vary based on the thickness of the stack type electrode assembly. As such, if swelling occurs in the stack type electrode assembly, the relative position of the electrode terminals to any unit cell will depend on the distance between the battery cell and the electrode terminals. As a result, when swelling occurs in a battery cell, strong tensile forces are applied to the electrode tabs of the battery cell that are farther away from the electrode terminals. However, if the electrode tabs and electrode terminals are designed as welding portions, only a minimal amount of space can be provided to account for manufacturing deviations. Therefore, as the battery degrades and swelling occurs, the electrode tabs under strong tensile forces are easily short-circuited from the attached electrode terminals, and the resulting disconnection of the electrode tabs adversely affects the safety of the battery.

Referring again to FIG. 9, disconnection or short-circuiting from the welding portion 330 of the positive electrode uncoated portion tab 112 and the negative electrode uncoated portion tab 114 due to swelling phenomenon is prevented by providing a spare length portion 300 on the positive electrode uncoated portion tab 112 and the negative electrode uncoated portion tab 114 of the battery cell 101. The length of the spare length portion 300 depends on the amount of swelling that may occur in the battery cell 101. When the relative positions of the positive electrode and negative electrode uncoated portion tabs 112, 114 of the stack type electrode assembly 110 electrically connected to the electrode terminals 210, 220 are changed by the swelling phenomenon, the length of the spare length portion 300 may change in response to the change in relative positions. Thus, the stresses applied to the positive electrode and negative electrode uncoated portion tabs 112, 114 due to the swelling phenomenon may be greatly reduced or eliminated, even if the relative positions of the stack type electrode assembly 110 have changed significantly.

FIG. 10 illustrates an electrode tab 112 or 114 of the battery cell 101 extending from the stack type electrode assembly 110 supported in a slit (or opening) 252 of the clip structure 250. The electrode tabs 112, 114 may be electrically connected to the electrode terminals 210, 220, and the spare length portion 300 may be shaped, for example, as an arc or curve, after passing through the slit (or opening) 252 of clip structure 250. The end of the spare length portion 300 forms a welding portion 330 that is joined to the clip structure 250, and through the welding portion, the electrode tabs 112 or 114 are electrically connected to the electrode terminals 210 or 220 through the clip structure 250.

In one embodiment, the clip structure 250 of the present invention may be a component that physically retains or supports the electrode tabs 112, 114, which may include a bundle or plurality of anode uncoated portions 106d and cathode uncoated portions 108d, through slits (or openings) 252 that are independent of their shape. For example, as shown in FIG. 10, the positive electrode or negative electrode uncoated portion tab 112 or 114 may be inserted to be temporarily fixed in the slit (or opening) 252 formed in the clip structure 250. In this case, temporarily fixed refers to a fixed state in which the positive electrode or negative electrode uncoated portion tab 112 or 114 is inserted into the clip structure 250 and is substantially fixed in position, but is subject to relative movement when some level of tensile force is applied.

The slits (or openings) 252 in the clip structure 250 are for temporarily fixing the electrode tabs 112 or 114 by exerting a pressure against them, and the spare length portion 300 is formed in succession to the slits (or openings) 252 in the clip structure 250 to counteract the swelling of the stack type electrode assembly 110. This means that when the stack type electrode assembly 110 swells and a tensile force is applied to the electrode tabs 112 or 114, the stress on the electrode tabs 112 or 114 is greatly relieved as the spare length portion 300 in the slits (or openings) 252 moves toward the stack type electrode assembly 110. In this embodiment, the lack of distinct polarity of the electrode tabs 112 or 114 and the positive electrode and negative electrode terminals 210, 220 may indicate that they are interchangeable, as the structure of the electrode tabs 112 or 114 and the spare length portion 300 of the clip structure 250 may be applied without distinguishing between the positive electrode and negative electrode.

In an exemplary embodiment, the spare length portion 300 may form a U-turn (or bending) portion 310 between the slit (or opening) 252 and the welding portion 330. The U-turn portion 310 may form a gentle curve toward the slit (or opening) 252 of the clip structure 250 to reduce resistance to movement of the spare length portion 300. In an exemplary embodiment, the relative position of the apex of the U-turn portion 310 may vary depending on the amount of movement of the spare length portion 300. FIG. 10 exemplarily illustrates a change in the relative position of electrode tabs 112 or 114 supported by the clip structure 250 when a swelling phenomenon occurs in the stack type electrode assembly 110. Compared to FIG. 9, the thickness of the stack type electrode assembly 110 has swelled (thickness increases from d to d'), and as the stack type electrode assembly 110 moves away from the slit (or opening) 252 of the clip structure 250, the relative movement at the slit (or opening) 252 increases. For example, if distance D1 is about 0.1 to 50 mm, preferably about 1 to 10 mm, then when the relative position of stack type electrode assembly 110 changes due to swelling, the apex position of the U-turn portion 310 may change such that distance D2 is about 0.1 to 20 mm, preferably about 0.5 to 5 mm. Thus, the spare length portion 300 can be moved by an amount corresponding to the movement of the electrode tabs 112 or 114, thereby preventing disconnection of the electrode tabs 112 or 114. In this embodiment, the electrode tabs 112 or 114 may be sophisticatedly designed to move only by the level of swelling, as the middle part of the electrode tabs 112 or 114 is supported by the clip structure 250 and movement of the electrode tabs 112 or 114 due to swelling is induced in a sliding motion. Accordingly, the spare length portion 300 of the electrode tabs 112 or 114 can effectively counteract the swelling of the stack type electrode assembly 110, and the position and movement of the spare length portion 300 can be precisely controlled to significantly reduce or eliminate risks such as internal shorts.

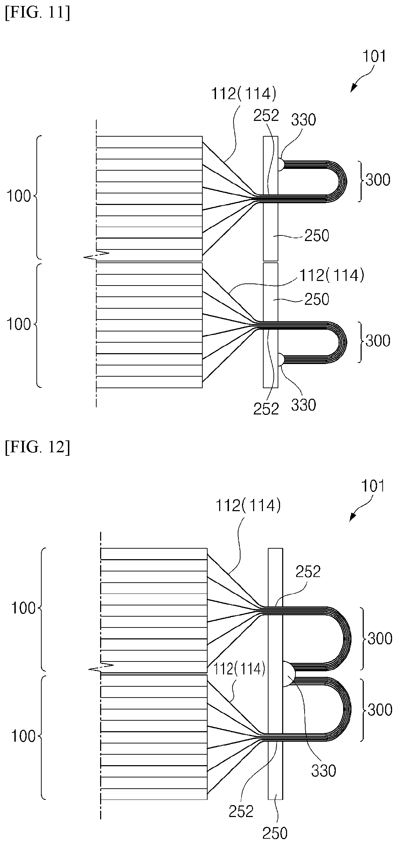

Alternatively, a plurality of stack type electrode assemblies 110 may be provided in a single battery cell 101, as exemplified in Figure 11. In this case, the positive electrode and negative electrode uncoated portion tabs 112, 114 extending from the plurality of stack type electrode assemblies 110 may be inserted into slits (or openings) 252 that are independent to the clip structure 250.

FIG. 11 illustrates that a plurality of stack type electrode assemblies 110 may be supported by a plurality of clip structures 250. This means that the plurality of clip structures 250 may be provided based on the number of stack type electrode assemblies 110, and each stack type electrode assembly 110 may be supported by a slit (or opening) 250 in a corresponding clip structure 250. One end of the spare length portion 300 provided on the electrode tabs 112 or 114 extending from each stack type electrode assembly 110 may form a welding part 330 to the clip structure 250 supporting the electrode tabs 112 or 114. That is, the embodiment shown in FIG. 11 may correspond to an embodiment in which the plurality of stack type electrode assemblies 110 are disposed in parallel. Alternatively, an embodiment in which the plurality of stack type electrode assemblies 110 are supported by a single clip structure 250 is also possible.

Referring to FIG. 12, a single clip structure 25 may have a plurality of slits (or openings) 252 corresponding to the number of stack type electrode assemblies 110, and each stack type electrode assembly 110 may be supported by a corresponding slit (or opening) 252. One end of any of the spare length portion 300 provided on the electrode tabs 112 or 114 extending from the stack type electrode assembly 110 may form a single welding portion 330. That is, a plurality of spare length portions 300 may be welded together to form a single welding portion 330. As the number of welding portion 330 is reduced, production efficiency may be improved.

In one embodiment, the spare length portion 300 may include a U-turn portion 330 between the slit (or opening) 252 and the welding portion 330, as described above, for each of the electrode tabs 112, 114 extending from the plurality of stack type electrode assemblies 110. In some embodiments, the configuration may further include reducing friction generated when the spare length portion 300, which is temporarily fixed in the slit (or opening) 252 of the clip structure 250, slides. This is to prevent the electrode tabs 112 or 114 from being damaged by unintentionally applying strong resistance as the spare length portion 300 slides. Accordingly, the clip structure 250 may include a friction reducing element 340 on the contact surface of the slit (or opening) 252. By providing the friction reducing element 340 on the contact surface of the slit (or opening) 252 that compresses the electrode tabs 112 or 114, the spare length portion 300 can slide smoothly.

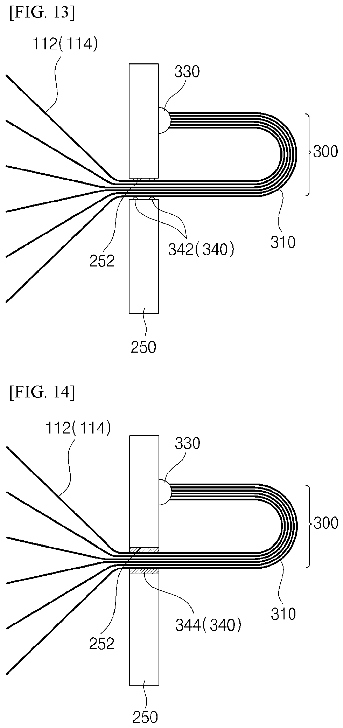

The friction reducing element 340 provided in the slit (or opening) 252 may be implemented in various shapes or forms. For example, as shown in FIG. 13, an embossing structure 342 provided in the slit (or opening) 252 of the clip structure 250 may function as the friction reducing element 340. The embossing structure 342, which has a hemispherical shape, reduces sliding resistance by reducing the contact area between the electrode tabs 112 or 114. However, the embossing structure 342 is not limited to a hemispherical shape, and various other shapes of protruding structures may additionally be applied and function as the friction reducing element 340.

In another exemplary embodiment shown in FIG. 14, a low friction coating layer 344 is applied as the friction reducing element 340. The term "low friction coating layer 344" literally is any of various coating layers that reduce a friction coefficient of a surface. For example, a chemically stable Teflon coating layer or a mechanically excellent diamond-like carbon (DLC) coating layer may be applied.

In the above, the present invention has been described in more detail through the drawings and embodiments. However, the configurations described in the drawings or the embodiments in the specification are merely embodiments of the present invention and do not represent all the technical ideas of the present invention. Thus, it is to be understood that there may be various equivalents and variations in place of them at the time of filing the present application.

### [Description of reference numerals]

100: STACK TYPE BATTERY
110: STACK TYPE ELECTRODE ASSEMBLY
112: POSITIVE ELECTRODE UNCOATED PORTION TAB
114: NEGATIVE ELECTRODE UNCOATED PORTION TAB
200: CURRENT COLLECTOR ASSEMBLY
210: POSITIVE ELECTRODE TERMINAL
220: NEGATIVE ELECTRODE TERMINAL
230: POSITIVE ELECTRODE CURRENT COLLECTOR
240: POSITIVE ELECTRODE CURRENT COLLECTOR
250: CLIP STRUCTURE
252: SLIT(OPENING)
300: SPARE LENGTH PORTION
310: U-TURN PORTION(BENDING PORTION)
330: WELDING PORTION
340: FRICTION REDUCING ELEMENT
342: EMBOSSING STRUCTURE
344: LOW FRICTION COATING LAYER
W: WELDING AREA

### [Industrial Availability]

The present invention is suitable for being applied to secondary batteries that are becoming larger in capacity.

## Claims

1. A secondary battery comprising:
an electrode assembly comprising a first electrode including a first portion and a first tab extending from the first portion, a separator laminated on the first electrode, and a second electrode including a second portion and a second tab extending from the second portion, and laminated on the separator;
a current collector assembly including a plate, a first current collector coupled to a proximal end of the plate and including a first part and a second part opposite to the first part, and a second current collector coupled to a proximal end of the plate and including a third part and a fourth part opposite to the third part; and
a housing coupled to the plate,
wherein:
the first tab is in a first receiving space between the first and second parts of the first current collector,
the second tab is in a second receiving space between a third part and a fourth part of the second current collector, and
the first and second parts of the first current collector are configured to move in opposite directions.

2. The secondary battery of claim 1, wherein:
the first portion of the first electrode comprises an active material.

3. The secondary battery of claim 1, wherein:
the first receiving space is an opening between the proximal end of the first part and the distal end of the second part.

4. The secondary battery of claim 1, wherein:
the second receiving space is an opening between the proximal end of the third part and the distal end of the fourth part.

5. The secondary battery of claim 1, wherein:
a part of the first tab is bent toward the first or second part.

6. The secondary battery of claim 1, wherein:
a part of the first tab is coupled to a surface of the first current collector.

7. The secondary battery of claim 1, further comprising:
a friction reducing element between the first tab and the first part, or between the first tab and the second part.

8. The secondary battery of claim 1, wherein:
the first part and the second part exert pressure on the first tab.

9. The secondary battery of claim 1, wherein:
the plate comprises a venting portion.

10. The secondary battery of claim 1, wherein:
the plate comprises a terminal electrically coupled to the first tab or to a first tab.

11. The secondary battery of claim 1, wherein:
a side of the electrode assembly is spaced apart from the first or second current collector.

12. The secondary battery of claim 1, wherein:
an end of the first tab is coupled to a coupling part on a surface of the first part or the second part of the first current collector, and
the coupling part and the first receiving space form an arc.

13. The secondary battery of claim 12, wherein:
the first tab is configured to slide between the first receiving spaces.

14. The secondary battery of claim 1, wherein:
the housing comprises a terminal electrically coupled to the first tab or the second tab.

15. The secondary battery of claim 1, wherein:
the housing comprises a venting portion.

16. A current collector assembly for a secondary battery comprising:
a plate;
a first current collector coupled to a proximal end of the plate and comprising a first part and a second part opposite to the first part;
a second current collector coupled to a distal end of the plate and comprising a third part and a fourth part opposite to the third part;
a first receiving space between the first part and the second part of the first current collector; and
a second receiving space between the third part and the fourth part of the second current collector;
wherein:
the first part and the second part of the first current collector are configured to move in opposite directions.

17. The current collector assembly for a secondary battery of claim 16, wherein:
the plate comprises a venting portion.

18. A manufacturing method of a secondary battery comprising:
providing a stack type electrode assembly comprising:
providing a first electrode comprising a first portion and a first tab extending from the first portion;
laminating a separator on the first electrode; and
laminating a second electrode comprising a second portion and a second tab extending from the second portion on the separator,
forming a current collector assembly comprising:
providing a plate;
coupling a first current collector comprising a first part and a second part opposite to the first part to a proximal end of the plate; and coupling a second current collector comprising a third part and a fourth part opposite to the third part to a distal end of the plate,
separating the first and second parts of the first current collector in opposite directions from each other;
inserting the first tab into a first receiving space between the first and second parts of the first current collector; and
inserting the first tab into a second receiving space between the third and fourth parts of the second current collector;

19. A manufacturing method of a secondary battery of claim 18, further comprising:
bending the first tab in a first direction toward the first part or second part.

20. A manufacturing method of a secondary battery of claim 18, further comprising:
coupling an end of the first tab to a surface of the first part or? the second part.
